# EUROPÄISCHE PATENTSCHRIFT

(11) **EP 1 910 714 B1**
(45) Veröffentlichungstag und Bekanntmachung des Hinweises auf die Patenterteilung: **19.06.2019**
(21) Anmeldenummer: 06762805.7
(22) Anmeldetag: 25.07.2006
(51) Int. Cl.: F16H 59/70

(54) **STELLVORRICHTUNG FÜR EIN GETRIEBE**
ADJUSTING DEVICE FOR A TRANSMISSION
DISPOSITIF D'ACTIONNEMENT POUR UNE BOITE DE VITESSES

(30) Priorität: 26.07.2005 DE 102005034865
(43) Veröffentlichungstag der Anmeldung: 16.04.2008
(73) Patentinhaber: KNORR-BREMSE Systeme für Nutzfahrzeuge GmbH, 80809 München (DE)
(72) Erfinder: DÖRR, Wolfgang, 82223 Eichenau (DE); SKRIBA, Zoltán, H-1037 Budapest (HU)
(74) Vertreter: Schönmann, Kurt
(86) Internationale Anmeldenummer: PCT/EP2006/007314
(87) Internationale Veröffentlichungsnummer: WO 2007/012461

(56) Entgegenhaltungen:
- EP-A- 1 063 450
- DE-A1- 4 208 888
- DE-A1- 10 032 907
- FR-A1- 2 707 360

## Beschreibung

Die vorliegende Erfindung betrifft eine Stellvorrichtung für ein Getriebe, insbesondere für ein Kraftfahrzeuggetriebe, mit zumindest einem beweglichen Stellelement, dessen Stellung von zumindest einem Sensor detektiert wird, wobei eine Codebahn vorgesehen ist, die Abschnitte mit unterschiedlichen Höhen aufweist, die dazu vorgesehen sind, von dem Sensor abgetastet zu werden, wobei die Abschnitte der Codebahn mit unterschiedlichen Höhen zumindest zweidimensional angeordnet sind, wobei die Codebahn mittels des beweglichen Stellelements nur entlang eines Schaltschemas bewegt werden kann, wobei eine Steuerelektronik dazu ausgebildet ist, eine von dem Sensor detektierte Höhe eines abgetasteten Abschnitts, in dem die Codebahn als zweidimensional stufenlose Codebahn ausgebildet ist, unter Berücksichtigung des Schaltschemas eindeutig einer Position des Stellelements zuzuordnen.

Mit dem Begriff "Getriebe" sollen sowohl Drehzahl- als auch Drehzahl-Drehmomentwandler sowie deren Komponenten bezeichnet werden, insbesondere sollen Kraftfahrzeug-Hauptgetriebe, -Kupplungen etc. mit diesem Begriff erfasst werden.

Die FR 2 707 360 A1 beschreibt eine Stellvorrichtung für ein Kraftfahrzeuggetriebe mit einem beweglichen Stellelement, dessen Stellung von einem Sensor detektiert wird. Eine Codebahn, die Abschnitte mit unterschiedlichen Höhen aufweist, ist dazu vorgesehen, von dem Sensor zweidimensional abgetastet zu werden. Die Abschnitte der Codebahn mit unterschiedlichen Höhen sind zweidimensional angeordnet, wobei die Codebahn mittels des beweglichen Stellelements nur entlang eines Schaltschemas bewegt werden kann. Eine Steuerelektronik ist dazu ausgebildet, eine von dem Sensor detektierte Höhe eines abgetasteten Abschnitts unter Berücksichtigung des Schaltschemas eindeutig einer Position des Stellelements zuzuordnen.

Die gattungsbildende EP 1 063 450 A1 beschreibt eine Verlängerung, die mit einer Schaltwelle für ein Kraftfahrzeuggetriebe mechanisch verbunden ist. Auf der Verlängerung ist ein Messelement befestigt. An einer schrägen Stirnseite des Messelements liegt ein federbelasteter Stößel an, der einen Magneten trägt. Der Magnet ist längs einer Messeinrichtung angeordnet. Die Messeinrichtung kann ein berührungsloser Sensor sein. Sowohl bei einem Axialverschieben der Schaltwelle als auch bei einem Drehen der Schaltwelle um ihre Achse wird der Stößel längs der Messeinrichtung verschoben. Der Verschiebeweg des Stößels und die damit erzeugten Spannungswerte der Messeinrichtung sind so aufeinander abgestimmt, dass die Messeinrichtung eindeutig feststellen kann, welche Gasse angewählt oder welcher Gang eingelegt worden ist.

Die DE 100 32 907 A1 beschreibt eine Schaltwelle zur Betätigung einer Getriebevorrichtung, deren Stellung von einem Sensor detektiert wird. Eine Codebahn weist Abschnitte mit unterschiedlichen Höhen auf, die dazu vorgesehen sind, von dem Sensor abgetastet zu werden. Die Abschnitte der Codebahn mit unterschiedlichen Höhen sind zweidimensional angeordnet. Eine Gangpositionsbestimmungseinheit ist dazu ausgebildet, eine von dem Sensor detektierte Höhe eines abgetasteten Abschnitts unter Berücksichtigung eines Schaltschemas eindeutig einer Position des Stellelements zuzuordnen.

Die DE 42 08 888 A1 beschreibt eine Ausführungsvariante eines Gangerkennungsmoduls. In das Stirnende einer Schaltstange ist ein Magnetträgerstift eingepresst. Ein Trägerstift trägt an seinem Ende eine Schaltnocke, die in einer Endstellung der Schaltstange einen mechanischen Schalter betätigt.

Bei der Steuerung derartiger Getriebe erfolgt eine Umsetzung von Eingangssignalen, die beispielsweise ein Bediener oder eine Steuerung erzeugt, in eine mechanische Bewegung von Teilen des Getriebes. So können beispielsweise bei einem Gang- beziehungsweise Übersetzungswechsel eines Kraftfahrzeuggetriebes eine Wähl- und eine Schaltrichtung erfasst, zunächst in Bewegungen eines Wähl- und eines Schalthebels umgesetzt und dann entsprechende Teile des Getriebes bewegt werden. Umgekehrt müssen die Bewegungen beziehungsweise Positionen beispielsweise der Wähl- und Schalthebel sowie die weiterer Teile des Getriebes wie beispielsweise die Position der Schaltgabeln sensiert werden.

Gemäß dem Stand der Technik werden bei der Steuerung von Fahrzeuggetrieben Wegsensoren eingesetzt. Diese weisen üblicherweise einen linear beweglichen Stift auf. Dabei ist der Sensorstift beispielsweise so mit der Schaltwelle gekoppelt, dass eine translatorische Bewegung der Schaltgabel zu einer linearen Bewegung des Sensorstifts führt. Der Sensor ist dabei üblicherweise im unteren Ölraum des Getriebes angeordnet und daher hohen Temperatur- und Medienbelastungen ausgesetzt. Aus diesem Grund werden üblicherweise induktive Wegsensoren eingesetzt, die sehr robust sind. Bei diesen induktiven Sensoren bewegt sich der Sensorstift im Inneren einer Spule. Eine Bewegung beispielsweise der Schaltwelle bewirkt eine Bewegung des Sensorstiftes, die wiederum eine Induktivitätsänderung in der Spule hervorruft. Neben der aufgrund der Umgebungsbedingungen notwendigerweise robusten und aufwändigen Ausführung des Wegsensors ergeben sich bei Lösungen gemäß dem Stand der Technik weitere Nachteile. Bei unterschiedlichen zu erfassenden Bewegungen ergeben sich in der Regel auch unterschiedliche Hublängen für die jeweiligen Wegsensoren. Es müssen demzufolge unterschiedliche Ausführungsformen von Sensoren verwendet werden. Ebenso erfordert die Erfassung unterschiedlicher Bewegungsarten wie beispielsweise bei translatorischen und rotatorischen Bewegungen jeweils unterschiedliche Sensorbauformen.

Eine weitere Herangehensweise gemäß dem Stand der Technik besteht darin, die zu sensierende lineare Bewegung der Schaltwelle über eine Codebahn dem Wegsensor zuzuführen. Dazu sind auf der Codebahn Abschnitte mit unterschiedlicher Höhe vorgesehen, wobei verschiedenen Höhen bestimmten Positionen der Schaltwelle entsprechen. Diese unterschiedlichen Höhen werden durch einen geeignet angeordneten linearen Wegsensor detektiert.

Der Erfindung liegt die Aufgabe zugrunde, eine Stellvorrichtung für Getriebe zur Verfügung zu stellen, bei der sowohl durch translatorische als auch durch rotatorische Bewegungen verursachte Positionsveränderungen mit geringem Aufwand erfasst werden können.

Diese Aufgabe wird mit den Merkmalen des Anspruchs 1 gelöst.

Vorteilhafte Weiterbildungen und Ausgestaltungen ergeben sich aus den abhängigen Ansprüchen.

Die erfindungsgemäße Stellvorrichtung baut auf dem gattungsgemäßen Stand der Technik dadurch auf, dass die Steuerelektronik dazu ausgebildet ist, bei der Zuordnung der detektierten Höhe zu einer Position des Stellelements zu berücksichtigen, dass eine Bewegung der zweidimensional stufenlosen Codebahn nur entweder in der einen oder in der anderen von zwei Dimensionen durchführbar ist. So können bei geeigneter Ausgestaltung der zweidimensionalen Codebahn zwei voneinander unabhängige Bewegungsrichtungen beziehungsweise die momentane Position des Stellelements hinsichtlich zweier unabhängiger Bewegungsrichtungen mit nur einem Sensor erfasst werden. Dabei kann zur eindeutigen Detektierung jeder zu erfassenden diskreten Position eine eindeutige Höhe auf der zweidimensionalen Codebahn zugeordnet werden. Alternativ können aber auch mehrere Positionen mit einer gleichen Höhe codiert werden, um eine Positionsgruppe zu bilden, die steuerungstechnisch gleich zu behandeln ist. Sofern der Sensor über ein Abtastelement verfügt, kann dessen Bewegungscharakteristik über eine entsprechende Gestaltung der Codebahnabschnitte an die Charakteristik des Sensor angepasst werden, insbesondere kann eine Drehbewegung zur Winkelerfassung in eine lineare Bewegung umgewandelt werden. Dies ermöglicht zumindest in einigen Fällen die Reduzierung der Anzahl an unterschiedlichen Sensortypen in einer Stellvorrichtung. Selbstverständlich kann die Codebahn auch auf gekrümmten Flächen, beispielsweise auf Wellen, angeordnet werden, sodass sich insgesamt eine dreidimensionale Anordnung ergibt. Aus diesem Grund wurde in Anspruch 1 die Formulierung "zumindest zweidimensional" gewählt.

Bei einer bevorzugten Ausführungsform ist vorgesehen, dass das Stellelement sowohl eine Translations- als auch eine Rotationsbewegung ausführen kann, wobei über den Sensor sowohl eine Winkelmessung als auch eine lineare Wegmessung erfolgt. Eine derartige kombinierte Erfassung von einer linearen Wegmessung und einer Winkelgröße mittels eines einzigen Sensors reduziert die Komplexität der Stellvorrichtung sowohl hinsichtlich der Anzahl an Sensoren als auch hinsichtlich des Auswerteaufwandes.

Weiterhin kann in vorteilhafter Weise vorgesehen sein, dass die Codebahn mechanisch mit dem Stellelement gekoppelt oder an diesem angeordnet ist. Der Sensor kann so die auf die Codebahn übertragene mechanische Bewegung des Stellelements erfassen. Beispielsweise kann die Codebahn auch direkt in die Form des Stellelements integriert sein. Dies stellt einen nur unwesentlich höheren Konstruktions- und Herstellungsaufwand dar.

Insbesondere ergibt sich eine vorteilhafte Ausführungsform dadurch, dass die Codebahn dazu vorgesehen ist, zumindest abschnittsweise in einem Ölraum eines Getriebes angeordnet zu werden. Dies ist in vielen Fällen vorteilhaft, da sich die zu überwachenden Stellelemente dort befinden.

Des Weiteren kann die Erfindung dadurch vorteilhaft ausgeführt werden, dass der Sensor dazu vorgesehen ist, zumindest abschnittsweise außerhalb eines Ölraums eines Getriebes angeordnet zu werden. Somit kann der Sensor außerhalb einer für ihn ungünstigen Umgebung angebracht werden, so dass eine kostengünstigere und/oder eine eine höhere Zuverlässigkeit aufweisende Konstruktionsform für den Sensor gewählt werden kann. Beispielsweise kann der Sensor in den Deckel eines Getriebes integriert werden. Somit ist nur die Unterseite des Sensors in Kontakt mit dem Ölraum und dort den entsprechenden hohen Belastungen ausgesetzt.

Eine weitere Ausführungsform ist dadurch weitergebildet, dass eine Mehrzahl von Sensoren vorgesehen ist, die zumindest im Wesentlichen parallel zueinander angeordnet sind. Die parallele Ausrichtung einer Mehrzahl von Sensoren erleichtert konstruktiv die elektrische Anbindung der Sensoren und vereinfacht deren Montage.

Insbesondere kann die Erfindung derart bevorzugt ausgeführt sein, dass mit der Mehrzahl der Sensoren die Winkelpositionen eines Wählhebels und eines Schalthebels sowie die Stellung von zumindest einer Schaltgabel des Getriebes detektiert werden. Auf diese Weise lassen sich alle für die Steuerung des Getriebes notwendigen Stellungsinformationen erfassen.

Des Weiteren ist insbesondere vorteilhaft, dass der Mehrzahl von Sensoren eine Mehrzahl von zumindest ähnlichen Auswerteschaltungen zugeordnet ist. Die Verwendung von möglichst wenigen, zumindest gleichartigen Auswerteschaltungen - im Idealfall nur einer gemeinsamen Auswerteschaltung - führt zu einer deutlichen Kostensenkung.

Die Codebahn kann zumindest abschnittsweise eine Nockenbahn sein. Dies ermöglicht beispielsweise eine direkte Ansteuerung des Sensors und damit eine direkte Übertragung der zu erfassenden Bewegung.

Die Codebahn ist als stufenlose Codebahn ausgebildet. Dies ist insbesondere bei einem Einsatz in automatischen Schaltgetrieben von Vorteil. Dabei kann beispielsweise eine stufenlose Nockenbahn für eine Schalt- und Wählbewegung direkt auf der Schaltwelle angeordnet werden, die eine Dreh- und eine Linearbewegung ausführt. Die Position ist dann zwar nicht eindeutig, da aber entweder nur der Schalt- oder nur der Gassenzylinder angesteuert wird, kann die Steuerelektronik die Position eindeutig zuordnen.

Eine vorteilhafte Ausführungsform kann sich auch dadurch ergeben, dass die Abschnitte mit unterschiedlichen Höhen von einem mit dem Sensor gekoppelten Abtastelement mechanisch abgetastet werden. Dies stellt eine robuste und einfach herzustellende Bauform dar.

Bei einer ebenfalls vorteilhaften Ausführungsform ist vorgesehen, dass der Sensor ein bewegliches Sensorelement aufweist, das mit dem Abtastelement mechanisch gekoppelt oder einstückig mit diesem ausgebildet ist. Eine Bewegung des Sensorelements führt dabei zu einem sich ändernden Ausgangssignal des Sensors. Die Verwendung eines separaten Abtastelements, beispielsweise in Form eines Stößels, ermöglicht so eine weitergehende Gestaltungsfreiheit in der Anbringung des Sensors.

Bei einer ebenfalls bevorzugten Ausführungsform ist vorgesehen, dass das Abtastelement in Richtung auf die Nockenbahn zu vorgespannt ist. Dadurch befindet sich das Abtastelement in stetigem mechanischen Kontakt mit der Nockenbahn. Der Sensor kann damit die augenblickliche Position beziehungsweise eine momentan stattfindende Positionsänderung des Stellelements sicher detektieren.

Es kann ebenfalls vorgesehen sein, dass einer Mehrzahl von Sensoren eine entsprechende Mehrzahl von Abschnitte mit unterschiedlichen Höhen aufweisenden Nockenbahnen und eine entsprechende Mehrzahl von Abtastelementen zugeordnet sind, wobei die Nockenbahnen so ausgelegt sind, dass sich für die Abtastelemente vergleichbare Hubbewegungen ergeben. So können aufgrund der vergleichbaren Hubbewegungen trotz der von den Stellelementen durchgeführten unterschiedlichen Bewegungen gleiche Sensoren eingesetzt werden, was die Anzahl an verschiedenen Bauelementen innerhalb der Stellvorrichtung vorteilhaft reduziert.

Eine weitere vorteilhafte Ausführungsform ergibt sich dadurch, dass die Nockenbahn zumindest eine Raste bildet. Dies erlaubt bei einer entsprechenden Ausgestaltung des Sensors beziehungsweise seiner Elemente eine Kombination der Funktionen "Rasten" und "Sensieren". Insbesondere können dabei auf verschiedenen Abschnitten der Nockenbahn Raststellungen auf unterschiedlichen Höhen vorgesehen sein. In diesem Fall kann in der jeweiligen Rastposition die entsprechende Stellung des Stellelements detektiert werden.

Insbesondere kann dabei vorteilhaft vorgesehen sein, dass das Abtastelement gleichzeitig ein Rastelement bildet. Durch das Ausüben der Rastfunktion durch das Abtastelement wird eine weitergehende Zusammenführung von Rast- und Sensorfunktionen und ein Reduzierung der Anzahl an Bauteilen erreicht.

Eine ebenfalls vorteilhafte Ausführungsform sieht vor, dass der Sensor ein induktiver Wegsensor ist. Induktive Wegsensoren sind insbesondere für den Einsatz in Umgebungen mit einer hohen Temperatur- und/oder Medienbelastung geeignet und können mittels der Nockenbahn sowohl Translations- als auch Rotationsbewegungen erfassen.

Des Weiteren kann vorteilhaft vorgesehen sein, dass die Abschnitte mit unterschiedlichen Höhen von dem Sensor berührungslos abgetastet werden. Eine derartige vollständige mechanische Entkopplung kann unter gewissen Umgebungsbedingungen, wie etwa bei besonders hohen Temperaturschwankungen oder bei starken Vibrationen, vorteilhaft sein.

In diesem Zusammenhang kann beispielsweise vorgesehen sein, dass der Sensor ein Hall-Sensor ist.

Der Erfindung liegt die Erkenntnis zugrunde, mit Hilfe einer zweidimensionalen Codebahn zwei unabhängige Bewegungsrichtungen mit einem Sensor zu detektieren. Dies ermöglicht einerseits eine Reduzierung der Anzahl an Sensoren und erlaubt andererseits eine einfache Erfassung von linearen und von Drehbewegungen.

Die Erfindung wird nun mit Bezugnahme auf die begleitenden Zeichnungen anhand bevorzugter Ausführungsformen beispielhaft erläutert.

Dabei zeigen:
- Figur 1: eine Schnittansicht eines im Rahmen der Erfindung einsetzbaren Sensors mit Abtastelement und Nockenbahn;
- Figur 2: eine Schnittansicht einer Ausführungsform der erfindungsgemäßen Stellvorrichtung, eingebaut in ein Getriebe;
- Figur 3: Schnittansichten einer Nockenbahn sowie eine schematische Darstellung derselben; und
- Figur 4: eine schematische Darstellung einer stufenlosen Codebahn.

Bei der nachfolgenden Beschreibung der Zeichnung bezeichnen gleiche Bezugszeichen gleiche oder vergleichbare Komponenten.

Die hier dargestellten Ausführungsformen der erfindungsgemäßen Stellvorrichtung sind für ein 3-Gangbeziehungsweise 4-Gang-Hauptgetriebe mit Rückwärtsgang vorgesehen. Selbstverständlich können mit der erfindungsgemäßen Vorrichtung auch Getriebe mit einer höheren oder einer niedrigeren Anzahl beziehungsweise auch Getriebegruppen und Kombinationen von Getrieben gestellt werden. Des Weiteren soll in diesem Zusammenhang der Begriff "Getriebe" insbesondere auch Kupplungen, Teile davon sowie andere stellbare Elemente umfassen.

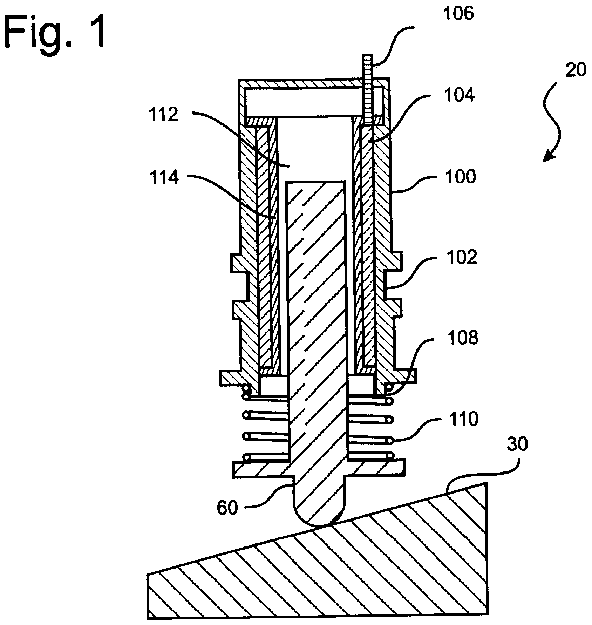

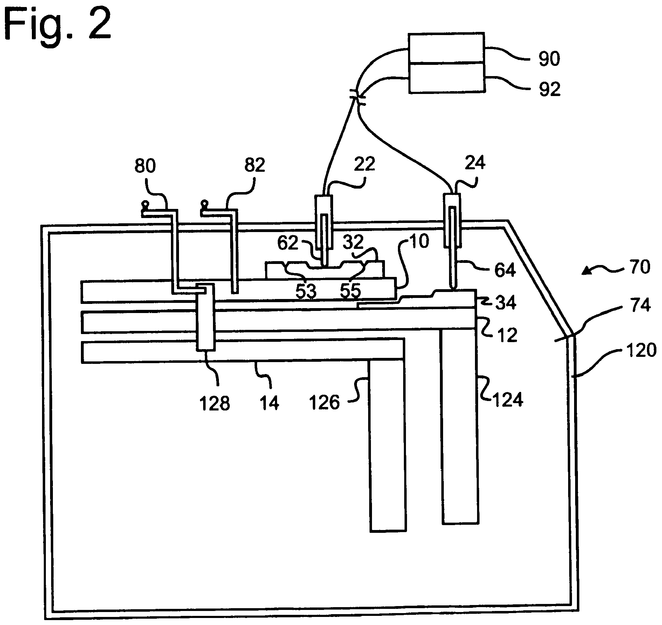

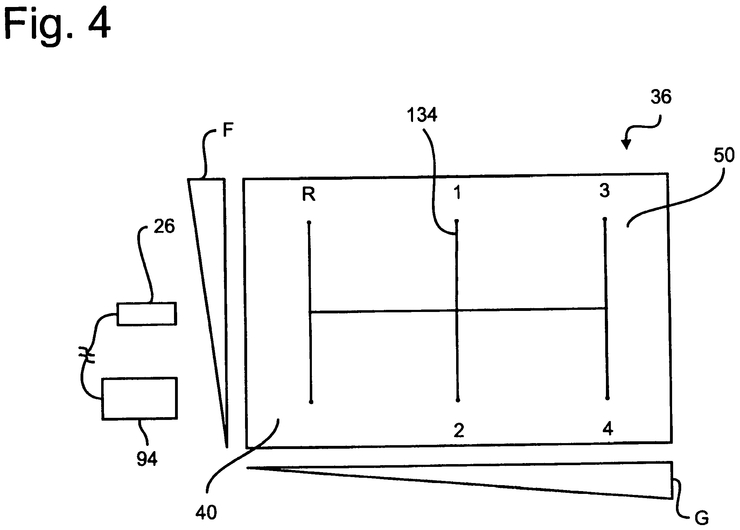

Figur 1 zeigt eine Schnittansicht eines Sensors 20 mit Abtastelement 60 und Nockenbahn 30. Zunächst sollen der prinzipielle Aufbau und die Funktionsweise eines mit einer Nockenbahn arbeitenden Sensors erläutert werden. Der Sensor 20 weist ein zylindrisches Gehäuse 100 auf, das mit einer umlaufenden Befestigungsnut 102 versehen ist. Innerhalb des Gehäuses ist eine Spule 104 angeordnet. Die Spule 104 ist mit einer Signalleitung 106 verbunden, die aus dem Gehäuse 100 herausführt. Innerhalb der Spule 104 befindet sich das Abtastelement 60, das sich entlang der Symmetrieachse des Sensors 20 erstreckt und in diesem Fall das bewegliche Sensorelement bildet. Das Abtastelement 60 ragt an der Öffnung 108 des Gehäuses 100 aus diesem heraus und ist mittels einer Feder 110 mechanisch mit diesem gekoppelt. Die Feder 110 spannt das Abtastelement 60 gegen eine Nockenbahn 30 vor und übt so eine Druckkraft auf das Abtastelement 60 aus, welche dieses von dem Gehäuse 100 des Sensors 20 weg gegen die Nockenbahn 30 drückt. Die Spule 104 des Sensors 20 ist gegenüber dem Innenraum 112 des Sensors 20 und damit auch gegen das Abtastelement 60 mittels einer Ummantelung 114 abgegrenzt. Das Gehäuse 100 des Sensors 20 ist über die Umfangsnut 102 beispielsweise ortsfest mit einem Gehäuse eines Getriebes (nicht dargestellt) verbunden, die Nockenbahn 30 kann ortsfest mit einem zu sensierenden Stellelement (nicht abgebildet) verbunden sein. Dahingehende beispielhafte Ausführungsformen sind im Folgenden in den Figuren 2 und 4 dargestellt und in der diesbezüglichen Beschreibung erläutert.

Die mit einem sich bewegenden Stellelement verbundene Nockenbahn 30 bewegt sich bei einer entsprechenden Positionsänderung des Stellelements relativ zu dem Gehäuse 100 des Sensors 20. Aufgrund der mechanischen Kopplung des Abtastelements 60 mit der Nockenbahn 30 über die Feder 110 bleibt das Abtastelement 60 in stetem Kontakt mit der Nockenbahn 30. Die sich verändernde Höhe der Nockenbahn 30, relativ zum unteren Rand 108 des Gehäuses 100, bewirkt eine Bewegung des Abtastelements 60 im Inneren 112 des Sensors 20. Dabei werden in der Induktionsspule 104 des Sensors 20 elektrische Impulse erzeugt, die über die elektrische Signalleitung 106 einer geeigneten Auswerteschaltung (hier nicht abgebildet) zugeführt und dort verarbeitet werden können.

Figur 2 zeigt eine Schnittansicht einer erfindungsgemäßen Ausführungsform der Stellvorrichtung, eingebaut in ein Getriebe. Diese schematische Darstellung zeigt Teile eines Getriebes 70. Auf für die Darstellung und Erklärung hier nicht näher interessierender Teile wie beispielsweise Zahnräder, Antriebswelle, etc. wurde aus Gründen der Übersichtlichkeit verzichtet. Innerhalb des Gehäuses des 3-Gang-Hauptgetriebes 70 mit Rückwärtsgang sind zwei Schaltstangen 12, 14 mit den zugehörigen Schaltgabeln 124, 126 dargestellt. Des Weiteren ist eine Stellvorrichtung, bestehend aus Stellelement 10, Wählhebel 80, Schalthebel 82 sowie einem Betätigungselement 128, abgebildet. In das Gehäuse der Getriebesteuerung sind zwei induktive Wegsensoren 22, 24 vertikal integriert. Die Sensoren 22, 24 entsprechen in ihrer Bauweise dem anhand von Figur 1 beschriebenen und dort dargestellten Sensor 20. Die Abtastelemente 62, 64 der Sensoren 22, 24 stehen in mechanischem Kontakt mit den entsprechenden Nockenbahnen 32, 34. Dabei ist die erste Nockenbahn 32 an dem Stellelement 10 angeordnet, als zweidimensionale Nockenbahn ausgeführt und mit Rastabschnitten 53, 55 versehen. Das ein Abtastelement 62 bildende bewegliche Sensorelement des Induktionssensors 22 tastet die Nockenbahn 32 ab und greift bei entsprechender Positionierung in die Rastabschnitte 53, 55. Die zweite Nockenbahn 34 ist an der Schaltstange 12 angebracht. Die Sensoren 22, 24 sind über Signalleitungen mit entsprechenden Auswerteschaltungen 90, 92 verbunden.

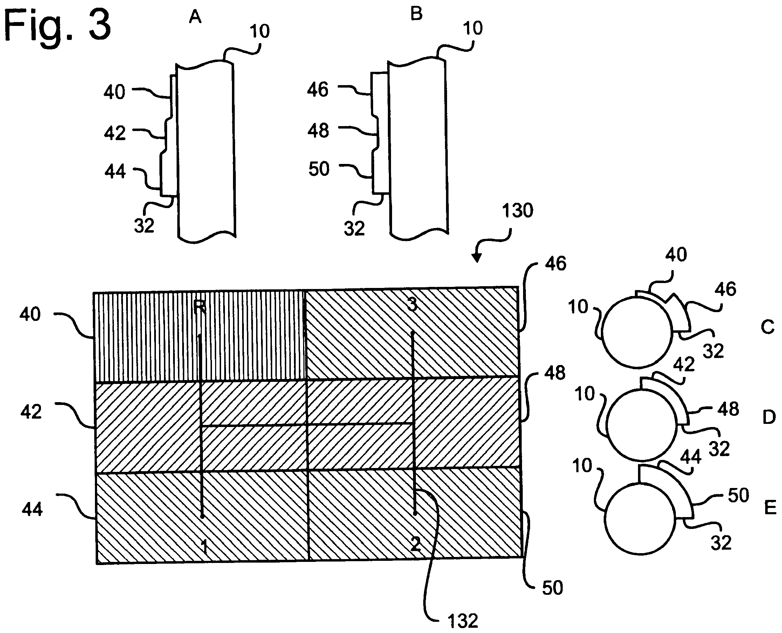

Die für das Schalten des Getriebes 70 benötigten Informationen über die Wähl- und Schaltrichtung werden dem Getriebe 70 über eine Bewegung des Wählhebels 80 beziehungsweise des Schalthebels 82 vermittelt. Dabei versetzt der Wählhebel 80 über eine entsprechend gestaltete Mechanik, insbesondere auch über das Betätigungselement 128, das Stellelement 10 in eine Rotationsbewegung um dessen Längsachse, stellt damit eine mechanische Kopplung zwischen dem Stellelement 10 und der auszuwählenden Schaltstange 12, 14 her und gibt die entsprechende andere Schaltstange 12, 14 frei. Während einer Schaltbewegung hingegen versetzt der Schalthebel 82 das Stellelement 10 in eine lineare Bewegung entlang dessen Längsachse und nimmt dabei eine entsprechend mit dem Stellelement 10 gekoppelte Schaltstange 12, 14 mit. Die entsprechende freigegebene Schaltstange 12, 14 wird nicht bewegt. Auf diese Weise können die mit den Schaltgabeln 124, 126 gekoppelten, nicht dargestellten, Teile des Getriebes 70 in den Kraftfluss eingerückt oder aus diesem entfernt werden. Die von dem Stellelement 10 ausgeführten Rotations- und Translationsbewegungen werden über die zweidimensionale Nockenbahn 32 auf das Abtastelement 62 des Sensors 22 übertragen. Eine detailliertere Darstellung der Nockenbahn 32 und ihrer Funktionalität ist in Figur 3 und in der zugehörigen Beschreibung zu finden. Die jeweils einer Endposition der Schaltstange 10 entsprechenden Positionen sind mit Rastvertiefungen 53, 55 versehen. In dieser Darstellung sind dabei beispielhaft zwei Rastabschnitte 53, 55 dargestellt, es können aber auch mehr Rastpositionen zur Verfügung gestellt werden. Durch die Vorspannung des Rast- und Sensorelements 62 in Richtung des Stellelements 10 greift jenes in die Rastabschnitte 53, 55 und sichert so das Stellelement 10 in der jeweiligen Position. Die durch das Abtast- und Sensorelement 62 hervorgerufene Induktionsänderung innerhalb des Sensors 22 wird als elektrisches Messsignal über eine entsprechende Signalleitung an die Auswerteschaltung 90 übertragen und dort ausgewertet. Auf diese Weise kann die augenblickliche Position beziehungsweise Stellung des Stellelements 10 mit Hilfe der entsprechend gestalteten Nockenbahn 32 und nur einem zugeordneten Sensor 22 erkannt werden. In ähnlicher Weise können die Stellungen der Schaltstange 12 detektiert werden. Diese kann drei Positionen einnehmen. Dies schlägt sich in drei Höhen der Nockenbahn 34 nieder, die einer Neutralstellung und zwei Endpositionen entsprechen. Bei Positionswechseln überträgt der Abtaststift 64 die veränderte Höhe als Messsignal über eine Signalleitung an die Auswerteschaltung 92. Die Auswerteschaltungen 90, 92 können im Wesentlichen gleich ausgeführt werden, da die Höhenänderungen der entsprechenden Nockenbahnen ähnlich gestaltet werden können. Da die zweidimensionale Nockenbahn 32 unter Umständen eine größere Anzahl an beziehungsweise eine genauere Differenzierung zwischen den Höhen benötigt, sind in diesem Ausführungsbeispiel zwei ähnliche Auswerteschaltungen 90, 92 vorgesehen. Die Sensoren 22, 24 sind durch ihre Integration senkrecht in den Getriebedeckel im Wesentlichen von dem unteren Innenraum 74 des Getriebes entfernt. Lediglich die Unterseite der Sensoren 22, 24 sowie die Abtastelemente 62, 64 ragen in den Ölraum 74.

Figur 3 zeigt Schnittansichten einer Nockenbahn und eine schematische Darstellung derselben. Die dargestellten Längsschnitte A, B verlaufen entlang der Längsachse des Stellelements 10 der Figur 2, die Querschnitte C, D, E senkrecht zur Längsachse des Stellelements 10. Auf die Darstellung der Rastabschnitte wurde in dieser Figur aus Gründen der Übersichtlichkeit verzichtet. Die Schnittansichten sowie die "Abwicklung" 130 der Nockenbahn 32 und das darüber gelegte Schaltschema 132 des 3-Gang-Hauptgetriebes mit Rückwärtsgang mit zwei Schaltstangen veranschaulichen den Aufbau und die Funktionalität der Nockenbahn 32, insbesondere die sich aus den Bewegungen des Stellelements 10 ergebenden Schaltzustände und die entsprechend zugeordneten Höhen der Nockenbahn 32. Die "Abwicklung" 130 der Nockenbahn 32 zeigt neun Felder 40-50. Diese Felder 40-50 entsprechen Abschnitten der Nockenbahn 32, wobei die unterschiedlichen Schraffuren die verschiedenen Höhen der einzelnen Abschnitte 40-50 andeuten. Die "Abwicklung" 130 ist so orientiert, dass die Längsachse des Stellelements 10 senkrecht verläuft, wie dies auch in den Längsschnitten A, B dargestellt ist. Das darüber gelegte Schaltschema 132 zeigt an, welches Feld 40-50 der Nockenbahn 32 bei entsprechenden Stellungen der Wähl- und Schalthebel 80, 82 in Kontakt mit dem Abtastelement 32 gelangt. Die Elemente 44, 46, 50, die Vorwärtsgängen zugeordnet sind, weisen eine größte Höhe, die Elemente 42, 48, die Neutralstellungen des Getriebes repräsentieren, eine mittlere Höhe und das Feld 40, das einem eingelegten Rückwärtsgang zugeordnet ist, eine niedrigste Höhe auf. Eine Bewegung, die in senkrechter Richtung erfolgt, also beispielsweise von Feld 50 über Feld 48 zu Feld 46, entspricht einer Bewegung des Stellelements 10 entlang seiner Längsachse und damit einer Schaltbewegung. Eine Bewegung in horizontaler Richtung, beispielsweise von Feld 42 zu Feld 48, entspricht einer Drehung des Stellelements 10 um seine Längsachse, also einer Wählbewegung. Die Längsschnitte A, B zeigen den Höhenverlauf der Nockenbahn 32, wie ihn das Abtastelement 62 des Sensors 22 der Figur 2 bei unterschiedlichen Drehstellungen des Stellelements 10 abtastet. Der Verlauf der Nockenbahn 32 der Querschnittsansicht A zeigt dabei den Höhenverlauf bei einem Gangwechsel, der von Gang 1 in den Rückwärtsgang R oder umgekehrt stattfindet. In analoger Weise zeigt die Querschnittsansicht B den Höhenverlauf der Nockenbahn 32 bei einem Gangwechsel von Gang 2 zu Gang 3 oder umgekehrt. Die Schnittansichten C, D, E zeigen dagegen Querschnitte senkrecht zur Längsachse des Stellelements 10. Die Schnittansicht C zeigt dabei die Höhenverhältnisse der Nockenbahn 32, die zwischen dem dem Rückwärtsgang R entsprechenden Feld 40 und dem dem Vorwärtsgang 3 entsprechenden Feld 46 herrschen. Die Schnittansicht D zeigt, dass in den Neutralstellungen der Felder 42 und 48 eine einheitliche mittlere Höhe auf der Nockenbahn 32 vorliegt. Die Schnittansicht E zeigt wiederum die größte Höhe in der Nockenbahn 32, die auf den Feldern 44 und 50 vorliegt, die beide jeweils den eingelegten Vorwärtsgängen 1 und 2 entsprechen.

Bei einer Bewegung des Stellelements 10 entlang seiner Längsachse, verursacht durch eine entsprechende Bewegung des Schalthebels 82, tastet das Abtastelement 62 des Sensors 22 die Nockenbahn 32 ab. Dabei kann sich das Abtastelement entweder entlang der Felder 46, 48, 50 bewegen und somit einen Gangwechsel zwischen dem Gang 2 und dem Gang 3 darstellen. Alternativ kann es sich zwischen den Feldern 40, 42 48 bewegen, und damit einen Gangwechsel zwischen dem Rückwärtsgang R und dem Vorwärtsgang 1 abbilden. Bei der erstgenannten Bewegung kann das Abtastelement die Vorwärtsgänge 2 und 3 von der Neutralstellung, die dem Feld 48 entspricht, unterscheiden. Bei der zweiten genannten Bewegung können der Rückwärtsgang R, die Neutralstellung und der Vorwärtsgang aufgrund der unterschiedlich zugewiesenen Höhen sensiert werden. Der Wechsel zwischen den beiden Neutralpositionen, die durch die Felder 42 und 48 kodiert werden, braucht bei dieser Ausführungsform nicht unterschieden werden.

Das dargestellte H-Schaltungsschema mit vier Endpositionen ist selbstverständlich nur ein Ausführungsbeispiel. Es könne auf diese Weise auch kompliziertere Stellvorrichtungen mit mehreren auszuwählenden Schaltstangen beziehungsweise auch eine Stellvorrichtung mit lediglich einer Schaltstange gesteuert werden. Des Weiteren ist die hier durchgeführte Beschränkung auf drei Höhen, die einem Rückwärtsgang, den Neutralstellungen und den Vorwärtsgängen entsprechen, ebenfalls willkürlich. Theoretisch kann jeder einzunehmenden Stellung eine individuelle Höhe zugewiesen werden. Unter Umständen ist es sogar möglich, bei entsprechender feiner Abtastung der Nockenbahn eine noch wesentlich größere Anzahl an Zwischenstellungen abzutasten.

Figur 4 zeigt eine schematische Darstellung einer erfindungsgemäßen stufenlosen Codebahn 36. Die Codebahn 36 ist gemäß dem vorliegenden Ausführungsbeispiel zur Erfassung einer Dreh- und einer Linearbewegung ausgeführt und für ein automatisiertes Schaltgetriebe vorgesehen. Die Codebahn 36 kann beispielsweise direkt auf der Schaltwelle (nicht abgebildet) angeordnet sein, welche die Dreh- und die Linearbewegung ausführt. Die Darstellung gibt, analog zu Figur 3, die "Abwicklung" der Codebahn 36 wieder. Das Schaltgetriebe ist hier beispielhaft durch ein Schaltschema 134 mit fünf Endpositionen angedeutet. Die Codebahn 36 zeichnet sich insbesondere durch einen stufenlosen Verlauf aus, d. h., die einzelnen zu detektierenden Stellungen werden zwar auch durch bestimmte Höhen 40, 50 codiert, es existieren aber in Schalt- beziehungsweise Wahlrichtung keine Bereiche mit gleicher Höhe. Diese Tatsache ist durch Schnittdarstellungen F, G verdeutlicht. Die in Schaltrichtung orientierte Schnittdarstellung F stellt den Steigungsverlauf der Codebahn 36 in Schaltrichtung dar, die in Wahlrichtung orientierte Schnittdarstellung G zeigt denselben in Wahlrichtung. Des Weiteren ist in Figur 4 als Alternative zu den in der vorstehenden Beschreibung erläuterten Abtastmethoden ein berührungsloser Sensor, hier beispielhaft ein Hallsensor 26, mit einer Auswerteelektronik 94 schematisch dargestellt. Selbstverständlich können auch hier die oben genannten Abtastverfahren eingesetzt werden. Der Hallsensor detektiert den Höhenverlauf der Codebahn 36 sowohl in Schalt- als auch in Wahlrichtung und ist hier zur Veranschaulichung im Zusammenhang mit dem Steigungsverlauf F der Codebahn 36 in Schaltrichtung dargestellt.

Bei einem Schalt- oder Wahlvorgang führt mit der Schaltwelle auch die Codebahn 36 eine Linearbeziehungsweise Drehbewegung aus. Die damit einhergehende Abstandsänderung zwischen der Codebahn 36 und dem Hallsensor 26 wird vom Hallsensor 26 als elektrischer Impuls an die Auswerteelektronik 94 weitergegeben. Dabei codiert sich die Bewegung der Codebahn 36 zwar zunächst nicht eindeutig, d. h., die vom Hallsensor 26 erfasste und weitergeleitete Information lässt primär keinen eindeutigen Schluss hinsichtlich der Art der erfolgten Bewegung (Wahl- oder Schaltbewegung) zu. Da aber nur entweder der Schalt- oder der Gassenzylinder angesteuert wird, kann die Steuer- und Auswerteelektronik 94 die Position eindeutig zuordnen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Stellelement
- 12: erste Schaltstange
- 14: zweite Schaltstange
- 20: Induktionssensor
- 22: Sensor für zweidimensionale Nockenbahn
- 24: Sensor für eindimensionale Nockenbahn
- 26: Hallsensor für zweidimensionale Codebahn
- 30: Nockenbahn
- 32: zweidimensionale Nockenbahn
- 34: eindimensionale Nockenbahn
- 36: zweidimensionale Codebahn
- 40: Nockenbahnabschnitt, niedrige Höhe
- 42: Nockenbahnabschnitt, mittlere Höhe
- 44: Nockenbahnabschnitt, große Höhe
- 46: Nockenbahnabschnitt, große Höhe
- 48: Nockenbahnabschnitt, mittlere Höhe
- 50: Nockenbahnabschnitt, große Höhe
- 53, 55: Rastabschnitte
- 60: Abtastelement
- 62: Abtastelement für die zweidimensionale Nockenbahn
- 64: Abtastelement für die eindimensionale Nockenbahn
- 70: Getriebe
- 74: Ölraum
- 80: Wählhebel
- 82: Schalthebel
- 90: Auswerteschaltung
- 92: Auswerteschaltung
- 94: Auswerteschaltung
- 100: Gehäuse
- 102: Umlaufnut
- 104: Spule
- 106: elektrische Anschlüsse
- 108: Gehäuseöffnung
- 110: Feder
- 112: Innenraum
- 114: Ummantelung
- 120: Getriebegehäuse
- 124: erste Schaltgabel
- 126: zweite Schaltgabel
- 128: Betätigungsvorrichtung
- 132: Schaltschema
- 134: Schaltschema
- A, B: Längsschnitt entlang der Längsachse des Stellelements 10
- C, D, E: Querschnitte senkrecht zur Längsachse des Stellelements 10
- F: Schnittdarstellungen der Codebahn 36 in Schaltrichtung
- G: Schnittdarstellungen der Codebahn 36 in Wahlrichtung

## Patentansprüche

1. Stellvorrichtung für ein Kraftfahrzeuggetriebe, mit zumindest einem als Schaltwelle ausgeführten beweglichen Stellelement (10-14), das von einem Schalt- und einem Gassenzylinder bewegt wird, dessen Stellung von zumindest einem Sensor (26) detektiert wird, wobei eine Codebahn (36) direkt auf der Schaltwelle vorgesehen ist, die eine Dreh- und eine Linearbewegung ausführen kann, wobei die Codebahn (36), die Abschnitte (40-50) mit unterschiedlichen Höhen aufweist, die dazu vorgesehen sind, von dem Sensor (20-26) abgetastet zu werden, wobei die Abschnitte (40-50) der Codebahn (36) mit unterschiedlichen Höhen zumindest zweidimensional angeordnet sind, wobei die Codebahn (36) mittels des beweglichen Stellelements (10-14) nur entlang eines Schaltschemas (134) bewegt werden kann, wobei eine Steuerelektronik (94) dazu ausgebildet ist, eine von dem Sensor (26) detektierte Höhe eines abgetasteten Abschnitts (40-50), in dem die Codebahn (36) als zweidimensional stufenlose Codebahn (36) ausgebildet ist, unter Berücksichtigung des Schaltschemas eindeutig einer Position des Stellelements (10-14) zuzuordnen, **dadurch gekennzeichnet, dass** die Steuerelektronik (94) dazu ausgebildet ist, bei der Zuordnung der detektierten Höhe zu einer Position des Stellelements (10-14) zu berücksichtigen, dass eine Bewegung des Stellelements (10-14) mit der Codebahn (36) entweder durch den Schalt- oder den Gassenzylinder erfolgt, so dass eine Bewegungsrichtung des Stellelementes (10-14) mit der Codebahn (36) bekannt ist.

2. Stellvorrichtung nach Anspruch 1, **dadurch gekennzeichnet, dass** das Stellelement (10) sowohl eine Translations- als auch eine Rotationsbewegung ausführen kann, wobei über den Sensor (22, 26) sowohl eine Winkelmessung als auch eine lineare Wegmessung erfolgt.

3. Stellvorrichtung nach Anspruch 1 oder 2, **dadurch gekennzeichnet, dass** die Codebahn (30-36) mechanisch mit dem Stellelement (10-14) gekoppelt oder an diesem angeordnet ist.

4. Stellvorrichtung nach einem der vorangehenden Ansprüche, **dadurch gekennzeichnet, dass** die Codebahn (30-36) dazu vorgesehen ist, zumindest abschnittsweise in einem Ölraum eines Getriebes angeordnet zu werden.

5. Stellvorrichtung nach einem der vorangehenden Ansprüche, **dadurch gekennzeichnet, dass** der Sensor (20-26) dazu vorgesehen ist, zumindest abschnittsweise außerhalb eines Ölraums (74, 76) eines Getriebes (70, 72) angeordnet zu werden.

6. Stellvorrichtung nach einem der vorangehenden Ansprüche, **dadurch gekennzeichnet, dass** eine Mehrzahl von Sensoren (22, 24) vorgesehen ist, die zumindest im Wesentlichen parallel zueinander angeordnet sind.

7. Stellvorrichtung nach Anspruch 6, **dadurch gekennzeichnet, dass** mit der Mehrzahl von Sensoren (22, 24) die Winkelpositionen eines Wählhebels (80) und eines Schalthebels (82) sowie die Stellung von zumindest einer Schaltgabel (12) des Getriebes (70) detektiert werden.

8. Stellvorrichtung nach Anspruch 6 oder 7, **dadurch gekennzeichnet, dass** der Mehrzahl von Sensoren (22, 24) eine Mehrzahl von zumindest ähnlichen (90, 92) Auswerteschaltungen zugeordnet ist.

9. Stellvorrichtung nach einem der vorangehenden Ansprüche, **dadurch gekennzeichnet, dass** die Codebahn (30-36) zumindest abschnittsweise eine Nockenbahn (32, 34) ist.

10. Stellvorrichtung nach einem der vorangehenden Ansprüche, **dadurch gekennzeichnet, dass** die Abschnitte (40-50) mit unterschiedlichen Höhen von einem mit dem Sensor (20-24) gekoppelten Abtastelement (60-64) mechanisch abgetastet werden.

11. Stellvorrichtung nach Anspruch 10, **dadurch gekennzeichnet, dass** der Sensor (20-24) ein bewegliches Sensorelement (60-64) aufweist, das mit dem Abtastelement (60-64) mechanisch gekoppelt oder einstückig mit diesem ausgebildet ist.

12. Stellvorrichtung nach Anspruch 10 oder 11, **dadurch gekennzeichnet, dass** das Abtastelement (60-64) in Richtung auf die Nockenbahn (30-34) zu vorgespannt ist.

13. Stellvorrichtung nach einem der Ansprüche 10 bis 12, **dadurch gekennzeichnet, dass** einer Mehrzahl von Sensoren (22, 24) eine entsprechende Mehrzahl von Abschnitte (40-50) mit unterschiedlichen Höhen aufweisenden Nockenbahnen (32, 34) und eine entsprechende Mehrzahl von Abtastelementen (62, 64) zugeordnet sind, wobei die Nockenbahnen (32, 34) so ausgelegt sind, dass sich für die Abtastelemente (62, 64) vergleichbare Hubbewegungen ergeben.

14. Stellvorrichtung nach einem der Ansprüche 10 bis 13, **dadurch gekennzeichnet, dass** die Nockenbahn (32) zumindest eine Raste (53, 55) bildet.

15. Stellvorrichtung nach einem der Ansprüche 10 bis 14, **dadurch gekennzeichnet, dass** das Abtastelement (62) gleichzeitig ein Rastelement bildet.

16. Stellvorrichtung nach einem der vorangehenden Ansprüche, **dadurch gekennzeichnet, dass** der Sensor (20-24) ein induktiver Wegsensor ist.

17. Stellvorrichtung nach einem der Ansprüche 1 bis 9, **dadurch gekennzeichnet, dass** die Abschnitte mit unterschiedlichen Höhen von dem Sensor (26) berührungslos abgetastet werden.

18. Stellvorrichtung nach Anspruch 17, **dadurch gekennzeichnet, dass** der Sensor (26) ein Hall-Sensor ist.

## Claims

1. Adjusting device for a motor vehicle transmission, with at least one moveable adjusting element (10-14) which is designed as a shift shaft, is moved by a shift cylinder and a gate cylinder, and the position of which is detected by at least one sensor (26), with a code path (36) being provided directly on the shift shaft which can execute a rotational and linear movement, with the code path (36) having sections (40-50) of different heights which are provided to be scanned by the sensor (20-26), with the sections (40-50) of the code path (36) of different heights being arranged at least two-dimensionally, with the code path (36) being able to be moved only along one shift scheme (134) by means of the moveable adjusting element (10-14), with an electronic control system (94) being designed tb assign a height, which is detected by the sensor (26), of a scanned section (40-50) in which the code path (36) is designed as a two-dimensionally stepless code path (36), unambiguously to a position of the adjusting element (10-14) taking the shift scheme into consideration, **characterized in that** the electronic control system (94) is designed in order, during the assignment of the detected height to a position of the adjusting element (10-14), to take into consideration that a movement of the adjusting element (10-14) with the code path (36) takes place either by means of the shift cylinder or the gate cylinder, and therefore a movement direction of the adjusting element (10-14) with the code path (36) is known.

2. Adjusting device according to Claim 1, **characterized in that** the adjusting element (10) can execute both a translational and a rotational movement, with both an angular measurement and a linear displacement measurement taking place via the sensor (22, 26).

3. Adjusting device according to Claim 1 or 2, **characterized in that** the code path (30-36) is coupled mechanically to the adjusting element (10-14) or is arranged thereon.

4. Adjusting device according to one of the preceding claims, **characterized in that** the code path (30-36) is provided to be arranged at least in some sections in an oil chamber of a transmission.

5. Adjusting device according to one of the preceding claims, **characterized in that** the sensor (20-26) is provided to be arranged at least in some sections outside an oil chamber (74, 76) of a transmission (70, 72).

6. Adjusting device according to one of the preceding claims, **characterized in that** a plurality of sensors (22, 24) is provided, said sensors being arranged at least essentially parallel to one another.

7. Adjusting device according to Claim 6, **characterized in that** the angular positions of a selector lever (80) and of a shift lever (82) and the position of at least one shift fork (12) of the transmission (70) are detected with the plurality of sensors (22, 24).

8. Adjusting device according to Claim 6 or 7, **characterized in that** the plurality of sensors (22, 24) is assigned a plurality of at least similar evaluation circuits (90, 92).

9. Adjusting device according to one of the preceding claims, **characterized in that** the code path (30-36) is a cam path (32, 34) at least in some sections.

10. Adjusting device according to one of the preceding claims, **characterized in that** the sections (40-50) of different heights are scanned mechanically by a scanning element (60-64) coupled to the sensor (20-24).

11. Adjusting device according to Claim 10, **characterized in that** the sensor (20-24) has a moveable sensor element (60-64) which is coupled mechanically to the scanning element (60-64) or is formed integrally therewith.

12. Adjusting device according to Claim 10 or 11, **characterized in that** the scanning element (60-64) is prestressed in the direction of the cam path (30-34).

13. Adjusting device according to one of Claims 10 to 12, **characterized in that** a plurality of sensors (22, 24) is assigned a corresponding plurality of cam paths (32, 34) having sections (40-50) of different heights and a corresponding plurality of scanning elements (62, 64), with the cam paths (32, 34) being designed in such a manner that comparable stroke movements are produced for the scanning elements (62, 64).

14. Adjusting device according to one of Claims 10 to 13, **characterized in that** the cam path (32) forms at least one catch (53, 55).

15. Adjusting device according to one of Claims 10 to 14, **characterized in that** the scanning element (62) simultaneously forms a latching element.

16. Adjusting device according to one of the preceding claims, **characterized in that** the sensor (20-24) is an inductive displacement sensor.

17. Adjusting device according to one of Claims 1 to 9, **characterized in that** the sections of different heights are scanned contactlessly by the sensor (26).

18. Adjusting device according to Claim 17, **characterized in that** the sensor (26) is a Hall sensor.

## Revendications

1. Dispositif d'actionnement d'une boîte de vitesse de véhicule automobile, comprenant au moins un élément (10 à 14) d'actionnement mobile, qui est réalisé en axe de commande de vitesse et qui est déplacé par un cylindre de commande de vitesse et par un cylindre des gaz, dont la position est détectée par au moins un capteur (26), une piste (36) de code étant prévue directement sur l'axe de commande de vitesse, qui peut exécuter un mouvement de rotation et un mouvement linéaire, la piste (36) de code ayant des parties (40 à 50) de hauteurs différentes, prévues pour être analysées par le capteur (20 à 26), les parties (40 à 50) de la piste (36) de code étant disposées à des hauteurs différentes suivant au moins deux dimensions, la piste (36) de code pouvant être déplacée au moyen de l'élément (0 à 14) d'actionnement mobile seulement suivant un schéma (134) de commande de vitesse, une électronique (94) de commande étant constituée pour associer de manière univoque, en tenant compte du schéma de commande de vitesse à une position de l'élément (10 à 14) d'actionnement une hauteur, détectée par le capteur (26), d'une partie (40 à 50) analysée, dans laquelle la piste (36) de code est constituée sous la forme d'une piste (36) de code continue à deux dimensions, **caractérisé en ce que** l'électronique (94) de commande est constituée pour tenir compte, dans l'association de la hauteur détectée à une position de l'élément (10 à 14) d'actionnement, du fait qu'un mouvement de l'élément (10 à 14) d'actionnement, avec la piste (36) de code, s'effectue soit par le cylindre de commande de vitesse, soit par le cylindre des gaz, de manière à connaître un sens de déplacement de l'élément (10 à 14) d'actionnement par la piste (36) de code.

2. Dispositif d'actionnement suivant la revendication 1, **caractérisé en ce que** l'élément (10) d'actionnement peut exécuter, tant un mouvement de translation qu'également un mouvement de rotation, à la fois une mesure d'angle et une mesure de trajet linéaire étant effectuées par le capteur (22, 26) .

3. Dispositif d'actionnement suivant la revendication 1 ou 2, **caractérisé en ce que** la piste (30 à 36) de code est assemblée mécaniquement à l'élément (10 à 14) d'actionnement ou est montée sur celui-ci.

4. Dispositif d'actionnement suivant l'une des revendications précédentes, **caractérisé en ce que** la piste (30 à 36) de code est prévue pour être disposée au moins par endroit dans un espace pour de l'huile d'une boîte de vitesse.

5. Dispositif d'actionnement suivant l'une des revendications précédentes, **caractérisé en ce que** le capteur (20 à 26) est prévu pour être disposé, au moins par endroit, à l'extérieur d'un espace (74, 76) pour de l'huile d'une boîte de vitesse (70, 72).

6. Dispositif d'actionnement suivant l'une des revendications précédentes, **caractérisé en ce qu'**il est prévu une pluralité de capteurs (22, 24), qui sont disposés au moins sensiblement parallèlement entre eux.

7. Dispositif d'actionnement suivant la revendication 6, **caractérisé en ce que**, par la pluralité de capteurs (22, 24), les positions angulaires d'un levier (80) de sélection et d'un 1 levier (82) de commande, ainsi que la position d'au moins une fourchette (12) de commande de la boîte de vitesse (70) sont détectées.

8. Dispositif d'actionnement suivant la revendication 6 ou 7, **caractérisé en ce qu'**à la pluralité de capteurs (22, 24) est associée une pluralité de circuits d'exploitation au moins semblables (90, 92).

9. Dispositif d'actionnement suivant l'une des revendications précédentes, **caractérisé en ce que** la piste (30 à 36) de code est, au moins par endroit, une piste (32, 34) à came.

10. Dispositif d'actionnement suivant l'une des revendications précédentes, **caractérisé en ce que** les parties (40 à 50) de hauteurs différentes sont analysées mécaniquement par un élément (60 à 64) d'analyse relié au capteur (20 à 24).

11. Dispositif d'actionnement suivant la revendication 10, **caractérisé en ce que** le capteur (20 à 24) est un élément (60 à 64) mobile formant capteur, qui est relié mécaniquement à l'élément (60 à 64) d'analyse ou qui est constitué d'une pièce avec celui-ci.

12. Dispositif d'actionnement suivant la revendication 10 ou 11, **caractérisé en ce que** l'élément (60 à 64) d'analyse est précontraint en direction de la piste (30 à 34) à came.

13. Dispositif d'actionnement suivant l'une des revendications 10 à 12, **caractérisé en ce qu'**à une pluralité de capteurs (22, 24) est associée une pluralité correspondante de pistes (32, 34) à came ayant des parties (40 à 50) de hauteurs différentes et une pluralité correspondante d'éléments (62, 64) d'analyse, les pistes (32, 34) à came étant conçues de manière à donner des courses comparables pour les éléments (62, 64) d'analyse.

14. Dispositif d'actionnement suivant l'une des revendications 10 à 13, **caractérisé en ce que** la piste (32) à came forme au moins un cliquet (53, 55).

15. Dispositif d'actionnement suivant l'une des revendications 10 à 14, **caractérisé en ce que** l'élément (62) d'analyse forme en même temps un élément de cliquet.

16. Dispositif d'actionnement suivant l'une des revendications précédentes, **caractérisé en ce que** le capteur (20 à 24) est un capteur de trajet inductif.

17. Dispositif d'actionnement suivant l'une des revendications 1 à 9, **caractérisé en ce que** les parties de hauteurs différentes sont analysées sans contact par le capteur (26).

18. Dispositif d'actionnement suivant la revendication (17), **caractérisé en ce que** le capteur (26) est un capteur de Hall.
